# EUROPÄISCHE PATENTSCHRIFT

(11) **EP 1 126 238 B1**
(45) Veröffentlichungstag und Bekanntmachung des Hinweises auf die Patenterteilung: **30.08.2006**
(21) Anmeldenummer: 01103219.0
(22) Anmeldetag: 12.02.2001
(51) Int. Cl.: G01C 9/16, G01C 9/12

(54) **Neigungsgeber**
Inclination sensor
Capteur d'inclinaison

(30) Priorität: 15.02.2000 DE 10007936
(43) Veröffentlichungstag der Anmeldung: 22.08.2001
(73) Patentinhaber: Fernsteuergeräte Kurt Oelsch GmbH, 12347 Berlin (DE)
(72) Erfinder: Schulz, Klaus-Dieter, 12349 Berlin (DE)
(74) Vertreter: Weisse, Renate

(56) Entgegenhaltungen:
- GB-A- 1 082 119
- GB-A- 1 497 809
- US-A- 3 606 687
- US-A- 5 136 784
- PATENT ABSTRACTS OF JAPAN vol. 010, no. 256 (P-493), 2. September 1986 (1986-09-02) & JP 61 084514 A (OMRON TATEISI ELECTRONICS CO), 30. April 1986 (1986-04-30)

## Beschreibung

### Technisches Gebiet

Die Erfindung betrifft einen Neigungsgeber nach dem Oberbegriff des Anspruchs 1.

Das Gehäuse des Neigungsgebers wird an einem Gegenstand befestigt, dessen Neigung gegenüber der Vertikalen festgestellt werden soll. Wenn der Gegenstand und damit auch das Gehäuse gegenüber der Vertikale geneigt ist, verändert sich die Stellung des Pendels gegenüber dem Gehäuse, da das Pendel bestrebt ist, stets vertikale ausgerichtet zu sein. Diese Stellung des Pendels wird durch einen Stellungsgeber abgegriffen, wodurch ein Maß für die Neigung erhalten werden kann.

Die Stellungsgeber können in Form von Winkelgeber ausgebildet sein, welche die Winkelstellung des Pendels abgreifen. Als Winkelgeber werden dabei potentiometrische, induktive, optische oder magnetoresistive Winkelgeber verwendet. Das Pendel wird in der Regel gedämpft, z.B. durch eine Dämpfungsflüssigkeit (z.B. Öl).

### Stand der Technik

Durch die DE 40 19 144 A1 ist ein Neigungsgeber bekannt, bei welchem ein Pendel in einem Gehäuse drehbar gelagert ist. Das Gehäuse ist mit einer Dämpfungsflüssigkeit gefüllt, durch welche die Bewegung des Pendels gedämpft wird. Mit dem Pendel ist ein Winkelgeber gekuppelt, welcher außerhalb des mit Dämpfungsflüssigkeit gefüllten Gehäuses angeordnet ist. Als Winkelgeber wird bevorzugt ein optischer Winkelgeber verwendet.

Bei bekannten Neigungsgeber dieser Art können Meßfehler auftreten, welche dazu führen, daß eine falsche Neigung angezeigt wird. Solche Meßfehler können z.B. durch Verschleiß des mechanischen Systems (insbesondere der Lagerung des Pendels) bedingt sein oder auch in dem elektronischen Auswertesystem auftreten. Bei bestimmten sicherheitskritischen Anwendungen können solche Meßfehler zu katastrophalen Folgen führen, z.B. bei der Lastmomentbegrenzung eines Autokrans, bei Neigungsmessungen von Schienenfahrzeugen oder bei der Positionierung von Theaterbühnen.

Durch die US 5,136,784 ist ein Neigungsgeber für Fahrzeuge bekannt. Der Neigungsgeber enthält ein erstes Messsystem mit einem ersten, drehbar gelagerten Pendel und einem mit dem ersten Pendel gekoppelten, ersten Potentiometer sowie ein zweite Messsystem mit einem zweiten, drehbar gelagerten Pendel und einem mit dem zweiten Pendel gekoppelten, zweiten Potentiometer. Die beiden Pendel sind so zu einander angeordnet, dass die Drehachsen der beiden Pendel sich kreuzen und somit eine definierte Ebene festlegen. Dadurch kann die Neigung des Fahrzeugs in verschiedenen Richtungen gemessen werden. GB-1082119 offenbart eine Vorrichtung mit zwei um eine gemeinsame Achse drehbar gelagerten Pendeln.

### Offenbarung der Erfindung

Der Erfindung liegt die Aufgabe zugrunde, einen Neigungsgeber der eingangs genannten Art zu schaffen, welcher einfach und kompakt aufgebaut ist und Meßfehler des Neigungsgebers automatisch erfaßt.

Erfindungsgemäß wird diese Aufgabe durch die im kennzeichnenden Teil des Anspruchs 1 aufgeführten Merkmale gelöst.

Durch das Vorsehen eines zweiten Systems aus Pendel und Meßsystem, wobei das erste und das zweite Pendel um eine gemeinsame Achse drehbar gelagert sind, sowie Vergleichsmittel zum Vergleich der beiden Neigungssignale wird ein sowohl mechanisch als auch elektronisch redundanter Neigungsgeber erzeugt. Der erfindungsgemäße Neigungsgeber erfaßt also sowohl eine mechanisch bedingte als auch eine elektronisch bedingte Abweichung der beiden Pendelsysteme. Sollten aufgrund von Meßfehlern in einem der beiden Systeme die beiden Neigungssignale voneinander abweichen, dann wird dies durch das Vergleichssignal erkannt. Dieses Vergleichssignal kann dann beispielsweise als Warnsignal ausgegeben werden oder einen bestimmten Vorgang automatisch abbrechen. Durch das Vorsehen der beiden Pendel in einem gemeinsamen Gehäuse kann der Neigungsgeber sehr kompakt ausgebildet werden. Bei flüssigkeitsgedämpften Pendel kann dann auch die gleiche Flüssigkeit zur Dämpfung beider Pendel verwendet werden.

Das erste und das zweite Pendel können identisch ausgebildet sein. Weiterhin können der erste und der zweite Stellungsgeber sowie die erste und die zweite elektronische Auswerteeinheit identisch ausgebildet sein.

Dies ist bei der Herstellung des Neigungsgebers besonders vorteilhaft, da eine geringere Anzahl unterschiedlicher Bauteile verwendet werden müssen.

Für die Erfassung einer Neigung werden somit zwei unabhängig voneinander arbeitenden Pendelsysteme eingesetzt, welche so ausgebildet sein können, daß sich die Pendel bei einwandfreiem Betrieb synchron zueinander bewegen.

Der erste und der zweite Stellungsgeber kann bzgl. der Pendel so angeordnet sein, daß der erste und der zweite Stellungsgeber gegensinnig arbeiten. Dies kann dadurch erreicht werden, daß die beiden Pendel spiegelsymmetrisch in dem Gehäuse gelagert sind und die beiden Stellungsgeber bzgl. der Pendel an gegenüberliegenden Seiten des Gehäuses angeordnet sind. Dies ermöglicht eine symmetrische Ausbildung des Neigungsgebers.

Als Stellungsgeber können beispielsweise potentiometrische Winkelgeber, induktive Winkelgeber, optische Winkelgeber oder magnetoresistive Winkelgeber verwendet werden.

Die Vergleichsmittel können eine elektronische Vergleichsschaltung enthalten, durch welche die beiden Neigungssignale miteinander verglichen werden. Diese Vergleichsschaltung kann als von den beiden Auswerteeinheiten unabhängige Einheit ausgebildet sein, z.B. in einem unabhängigen Rechner integriert sein. Sie kann jedoch auch in der ersten und/oder zweiten Auswerteeinheit integriert sein.

Bei vielen Anwendungen ist eine absolute Angabe der Abweichung zwischen den beiden Neigungssignalen nicht von Interesse. Bei bestimmten Anwendungen kommt es vielmehr darauf an, ob eine bestimmte Abweichungsgrenze überschritten wird. Zu diesem Zweck können die Vergleichsmittel
(a) Mittel zur Bestimmung der Abweichung zwischen dem ersten und dem zweiten Neigungssignal enthalten, sowie
(b) Schwellenwertmittel zum Festlegen eines Schwellenwerts für diese Abweichung, und
(c) Signalgebermittel, durch welche ein Signal erzeugbar ist, wenn die bestimmte Abweichung den festgelegten Schwellenwert überschreitet.

Vorteilhafterweise ist der Schwellenwert einstellbar, so daß individuell unterschiedliche Wünsche bzgl. der Größe des Schwellwerts berücksichtigt werden können.

Ausführungsbeispiele der Erfindung sind nachstehend unter Bezugnahme auf die zugehörigen Zeichnungen näher erläutert.

### Kurze Beschreibung der Zeichnungen

- Fig. 1: ist eine schematische Darstellung und zeigt eine Frontansicht eines ersten Ausführungsbeispiels eines Neigungsgebers mit zwei Pendel, wobei die Winkelstellungen der Pendel durch induktive Winkelgeber erfaßt werden.
- Fig. 2: ist eine schematische Darstellung und zeigt eine Frontansicht eines zweiten Ausführungsbeispiels eines Neigungsgebers mit zwei Pendeln, wobei die Winkelstellungen der Pendel durch induktive Winkelgeber erfaßt werden.
- Fig. 3: ist eine schematische Darstellung und zeigt eine Seitenansicht des Neigungsgebers von Fig. 2.
- Fig. 4: ist eine schematische Darstellung und zeigt eine Frontansicht eines drittes Ausführungsbeispiels eines Neigungsgebers mit zwei Pendeln, wobei die Winkelstellungen der Pendel durch potentiometrische Winkelgeber erfaßt werden.
- Fig. 5: ist eine schematische Blockdarstellung und zeigt eine Anordnung zur Auswertung der Neigungssignale.

### Bevorzugtes Ausführungsbeispiel

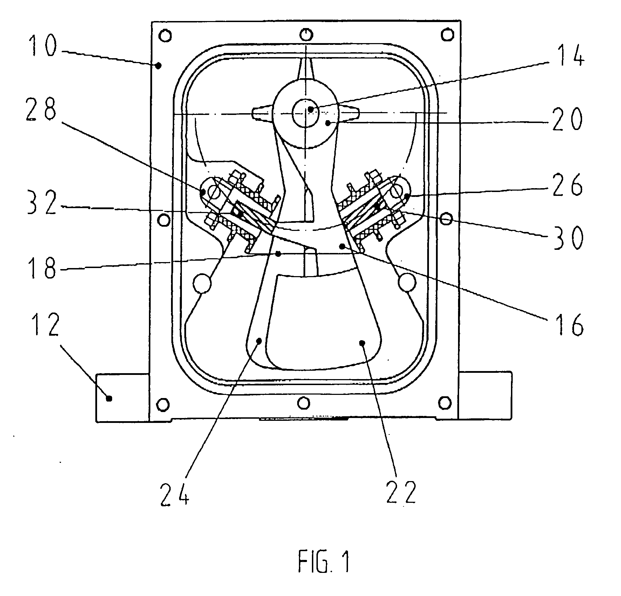

In Fig. 1 ist mit 10 ein Gehäuse bezeichnet. Das Gehäuse 10 ist zweiteilig ausgebildet mit einem Gehäusekörper und einem Gehäusedeckel und in Fig. 1 mit abgenommen Gehäusedeckel gezeigt. Das Gehäuse 10 ist mit Befestigungsaugen 12 an einem Gegenstand befestigbar, dessen Neigung gemessen werden soll. In dem Gehäuse 10 befindet sich eine Welle 14, an welcher ein erstes Pendel 16 und ein zweites Pendel 18 drehbar gelagert sind. Die beiden Pendel 16 und 18 sind identisch ausgebildet. Die Pendel 16 und 18 enthalten jeweils einen Nabenteil, mit welchem sie an der Welle 14 gelagert sind. In Fig. 1 ist nur das Nabenteil 20 des ersten Pendels 16 sichtbar. Die Pendel 16 und 18 enthalten weiterhin jeweils ein Pendelgewicht 22 bzw. 24. Zur besseren Darstellung sind die beiden Pendel 16 und 18 in Fig. 1 leicht versetzt dargestellt. Das Gehäuse 10 ist in üblicherweise mit einer Dämpfungsflüssigkeit gefüllt.

In dem Gehäuse 10 ist eine erste und eine zweite Spule 26 bzw. 28 befestigt. Die Spulen 26 und 28 wirken mit jeweils einem an dem jeweiligen Pendel 16 bzw. 18 als erster bzw. zweiter Kern 30 bzw. 32 ausgebildeten Vorsprung zusammen und bilden somit zwei getrennte Spulensysteme, nämlich ein erstes Spulensystem aus Spule 26 und Kern 30 und ein zweites Spulensystem aus Spule 28 und Kern 32.

Wie aus Fig. 1 ersichtlich, sind die beiden Spulen 26 und 28 bzgl. der Welle 14 an einander gegenüberliegenden Seiten in dem Gehäuse 10 angeordnet. Die beiden identisch ausgebildeten Pendel 16 und 18 sind spiegelsymmetrisch an der Welle 14 gelagert, so daß die beiden als Kern 30 und 32 ausgebildeten Vorsprünge in entgegengesetzten Richtungen zeigen. Beispielsweise bei einer Neigung des Gehäuses 10 im Uhrzeigersinn in Fig. 1 wird damit der Kern 30 des ersten Pendels 16 weiter in die erste Spule 26 hinein bewegt und der Kern 32 des zweiten Pendels 18 weiter aus der zweiten Spule 28 heraus bewegt. Wie aus Fig. 1 ersichtlich, erlaubt die Ausbildung der beiden Spulensysteme in dem in Fig. 1 dargestellten Neigungsgeber nur einen begrenzten Neigungswinkel.

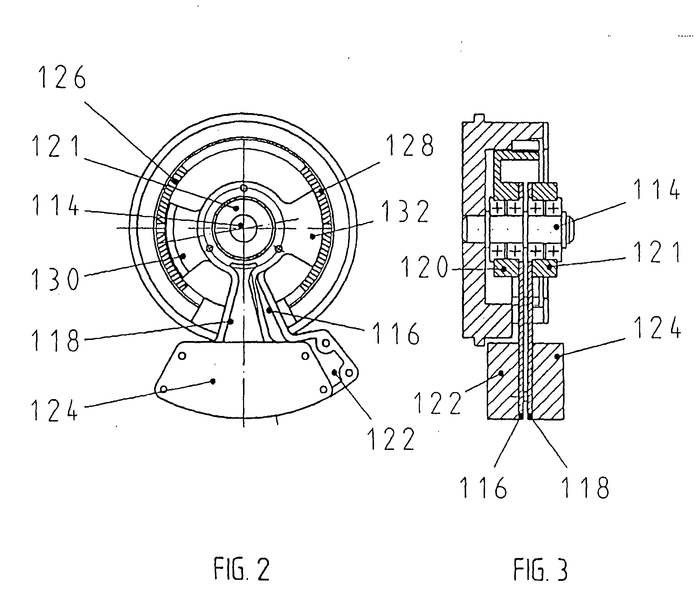

In Fig. 2 und 3 ist ein zweites Ausführungsbeispiel eines Neigungsgebers dargestellt. Der in Fig. 2 und 3 dargestellte Neigungsgeber ist ebenfalls in einem (hier nicht dargestellten) Gehäuse angeordnet. An einer gehäusefesten Welle 114 sind ein erstes Pendel 116 und ein zweites Pendel 118 drehbar gelagert sind. Die beiden Pendel 116 und 118 sind identisch ausgebildet. Die Pendel 116 und 118 sind mit jeweils einem Nabenteil 120 bzw. 121 an der Welle 114 gelagert. Die Pendel 116 und 118 enthalten weiterhin jeweils ein Pendelgewicht 122 bzw. 124. Zur besseren Darstellung sind die beiden Pendel 116 und 118 in Fig. 2 leicht versetzt dargestellt.

Eine erste und eine zweite Spule 126 bzw. 128 sind gehäusefest angeordnet. Die Spulen 126 und 128 wirken mit jeweils einem an dem jeweiligen Pendel 116 bzw. 118 als erster bzw. zweiter Kern 130 bzw. 132 ausgebildeten Vorsprung zusammen und bilden somit zwei getrennte Spulensysteme, nämlich ein erstes Spulensystem aus Spule 126 und Kern 130 und ein zweites Spulensystem aus Spule 128 und Kern 132.

Wie aus Fig. 2 ersichtlich, sind die beiden Spulen 126 und 128 bzgl. der Welle 114 an einander gegenüberliegenden Seiten angeordnet. Die beiden identisch ausgebildeten Pendel 116 und 118 sind spiegelsymmetrisch an der Welle 114 gelagert, so daß die beiden als Kern 130 und 132 ausgebildeten Vorsprünge in entgegengesetzten Richtungen zeigen. Wie aus Fig. 2 ersichtlich, erlaubt die Ausbildung der beiden Spulensysteme in dem in Fig. 2 dargestellten Neigungsgeber einen unbegrenzten Neigungswinkel, da die Pendel 116 und 118 durchdrehend ausgebildet sein können.

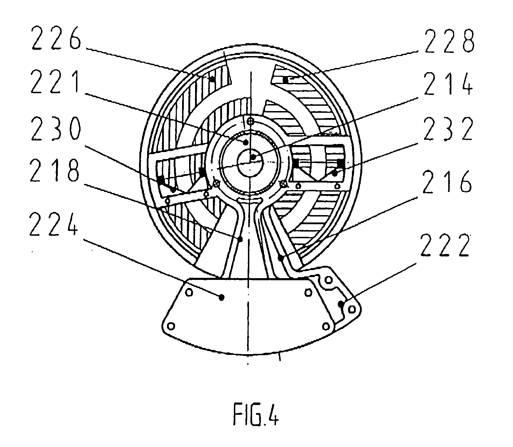

In Fig. 4 ist ein drittes Ausführungsbeispiel eines Neigungsgebers dargestellt. Der in Fig. 4 dargestellte Neigungsgeber ist ebenfalls in einem (hier nicht dargestellten) Gehäuse angeordnet. An einer gehäusefesten Welle 214 sind ein erstes Pendel 216 und ein zweites Pendel 218 drehbar gelagert sind. Die beiden Pendel 216 und 218 sind identisch ausgebildet. Die Pendel 216 und 218 enthalten jeweils einen Nabenteil, mit welchem sie an der Welle 214 gelagert sind. In Fig. 4 ist nur das Nabenteil 221 des zweiten Pendels 218 sichtbar. Die Pendel 216 und 218 enthalten weiterhin jeweils ein Pendelgewicht 222 bzw. 224. Zur besseren Darstellung sind die beiden Pendel 216 und 218 in Fig. 4 leicht versetzt dargestellt.

Ein erstes und ein zweites Widerstandselement 226 bzw. 228 (z.B. in der Form einer üblichen potentiometrischen Widerstandswicklung) sind gehäusefest angeordnet. Die Widerstandselemente 226 und 228 wirken mit jeweils einem an dem jeweiligen Pendel 216 bzw. 218 als erstes bzw. zweites Kontaktelement 230 bzw. 232 (z.B. in der Form von üblichen potentiometrischen Schleifkontakten) ausgebildeten Vorsprung zusammen und bilden somit zwei getrennte Potentiometersysteme, nämlich ein erstes Potentiometersystem aus Widerstandselement 226 und Kontaktelement 230 und ein zweites Potentiometersystem aus Widerstandselement 228 und Kontaktelement 232.

Wie aus Fig. 4 ersichtlich, sind die beiden Widerstandselemente 226 und 228 bzgl. der Welle 214 an einander gegenüberliegenden Seiten angeordnet. Die beiden identisch ausgebildeten Pendel 216 und 218 sind spiegelsymmetrisch an der Welle 214 gelagert, so daß die beiden als Kontaktelement 230 und 232 ausgebildeten Vorsprünge in entgegengesetzten Richtungen zeigen. Wie aus Fig. 4 ersichtlich, erlaubt die Ausbildung der beiden Potentiometersysteme in dem in Fig. 4 dargestellten Neigungsgeber einen unbegrenzten Neigungswinkel, da die Pendel 216 und 218 durchdrehend ausgebildet sein können.

In weiteren, in den Figuren nicht dargestellten Ausführungsbeispiele des Neigungsgebers sind die beiden Pendel und die beiden Meßsysteme so ausgebildet, daß die Stellung der Pendel mittels magnetoresistiven Systeme oder optischen Systeme erfaßt werden. Solche Systeme sind an sich bekannt (s. beispielsweise DE 40 19 144 A1) und werden hier in Übereinstimmung mit den in den Fig. 1-4 dargestellten induktiven und potentiometrischen Systeme ausgebildet.

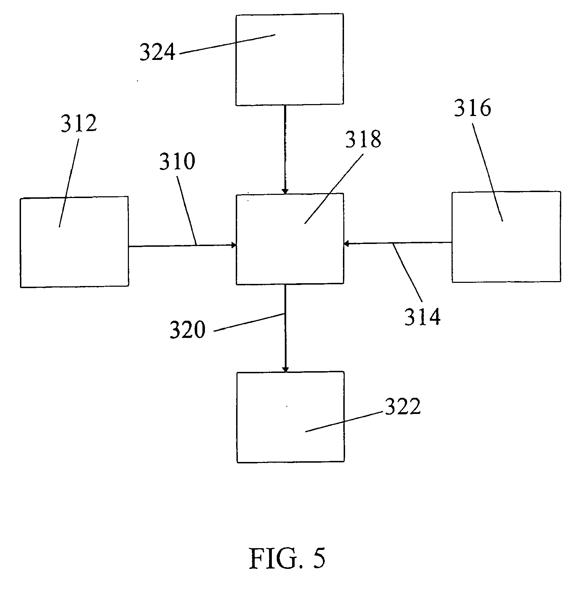

Das Erzielen von Neigungssignalen mittels eines induktiven, potentiometrischen, magnetoresistiven oder optischen Winkelgebers mit einem einzigen Pendel und einem einzigen Meßsystem (z.B. einem Meßsystem entsprechend einem der Pendel 116, 118, 216, 218, 316 oder 318 in Kombination mit einem der zugehörigen, in Fig. 1-4 dargestellten Spulen- oder Potentiometersysteme) erfolgt über eine elektronische Auswerteeinheit und ist an sich bekannt und deshalb hier nicht näher dargestellt. Bei den in Fig. 1-4 dargestellten Neigungsgeber liefern in dieser bekannten Weise das jeweils erste Meßsystem über eine jeweils erste Auswerteeinheit ein erstes Neigungssignal und das jeweils zweite Meßsystem über eine jeweils zweite Auswerteeinheit ein zweites Neigungssignal. Dies ist in Fig. 5 schematisch anhand eines Blockdiagramms dargestellt. Das erste Neigungssignal 310 der ersten Auswerteeinheit 312 und das zweite Neigungssignal 314 der zweiten Auswerteeinheit 316 werden auf einen Signalkomparator 318 aufgeschaltet. Der Signalkomparator 318 vergleicht die beiden Neigungssignale 310 und 314 miteinander. Wenn die Abweichung der beiden Neigungssignale 310 und 314 von einander einen vorbestimmten Schwellenwert (z.B. 1%) überschreitet, dann liefert der Signalkomparator 318 ein Komparatorsignal 320, durch welches ein Signalgeber 322 aktiviert wird, welcher ein Warnsignal liefert. Weiterhin sind Schwellwert-Einstellmittel 324 vorgesehen, um den vorgegebenen Schwellwert in gewünschter Weise einzustellen. Das Vergleichen von Signalen und das Einstellen eines Schwellwerts ist an sich bekannt und wird deshalb hier nicht näher beschrieben.

## Patentansprüche

1. Neigungsgeber, enthaltend
(a) ein erstes, in einem Gehäuse (10) drehbar gelagertes Pendel (16;116;216),
(b) ein erstes Meßsystem mit
(b₁) einem ersten, mit dem ersten Pendel (16;116;216) gekuppelten Stellungsgeber (26,30;126,130;226,230), und
(b₂) einer ersten, dem ersten Stellungsgeber (26,30;126,130;226,230) zugeordneten elektronischen Auswerteeinheit (312), durch welche ein erstes Neigungssignal (310) in Abhängigkeit von der Stellung des ersten Pendels (16;116;216) bzgl. des Gehäuses (10) erzeugbar ist,
(c) ein zweites, in dem Gehäuse (10) drehbar gelagertes Pendel (18;118;218),
(d) ein zweites Meßsystem mit
(d₁) einem zweiten, mit dem zweiten Pendel (18;118;218) gekuppelten Stellungsgeber (28,32; 128,132;228,232), und
(d₂) einer zweiten, dem zweiten Stellungsgeber (28,32;128,132;228,232) zugeordneten elektronischen Auswerteeinheit (316), durch welche ein zweites Neigungssignal (314) in Abhängigkeit von der Stellung des zweiten Pendels (18;118;218) bzgl. des Gehäuses (10) erzeugbar ist, und
(e) Vergleichsmittel (318), durch welche das erste und das zweite Neigungssignal (310 bzw. 314) miteinander verglichen werden und durch welche ein Vergleichssignal (320) in Abhängigkeit von diesem Vergleich erzeugbar ist.
**dadurch gekennzeichnet, daß**
(f) das erste und das zweite Pendel (16 bzw. 18; 116 bzw. 118; 216 bzw. 218) um eine gemeinsame Achse (14;114;214) drehbar gelagert sind.

2. Neigungsgeber nach Anspruch 1, **dadurch gekennzeichnet, daß** das erste und das zweite Pendel (16 bzw. 18; 116 bzw. 118; 216 bzw. 218) identisch ausgebildet sind.

3. Neigungsgeber nach Anspruch 1 oder 2, **dadurch gekennzeichnet, daß** der erste und der zweite Stellungsgeber (26,30 bzw. 28,32; 126,130 bzw. 128,132; 226,230 bzw. 228,232) identisch ausgebildet sind.

4. Neigungsgeber nach einem der Ansprüche 1-3, **dadurch gekennzeichnet, daß** der erste und der zweite Stellungsgeber (26,30 bzw. 28,32; 126,130 bzw. 128,132; 226,230 bzw. 228,232) geeignet said gegensinnig zu arbeiten.

5. Neigungsgeber nach einem der Ansprüche 1-4, **dadurch gekennzeichnet, daß** die erste und die zweite elektronische Auswerteeinheit (312 bzw. 316) identisch ausgebildet sind.

6. Neigungsgeber nach einem der Ansprüche 1-5, **dadurch gekennzeichnet, daß** der erste und/oder der zweite Stellungsgeber ein potentiometrischer Winkelgeber (226,230 bzw. 228,232) ist.

7. Neigungsgeber nach einem der Ansprüche 1-6, **dadurch gekennzeichnet, daß** der erste und/oder der zweite Stellungsgeber (26,30 bzw. 28,32; 126,130 bzw. 128,132) ein induktiver Winkelgeber ist.

8. Neigungsgeber nach einem der Ansprüche 1-7, **dadurch gekennzeichnet, daß** der erste und/oder der zweite Stellungsgeber ein optischer Winkelgeber ist.

9. Neigungsgeber nach einem der Ansprüche 1-8, **dadurch gekennzeichnet, daß** der erste und/oder der zweite Stellungsgeber ein magnetoresistiver Winkelgeber ist.

10. Neigungsgeber nach einem der Ansprüche 1-9, **dadurch gekennzeichnet, daß** die Vergleichsmittel eine elektronische Vergleichsschaltung (318) enthalten, welche in der ersten und/oder zweiten Auswerteeinheit (312 bzw. 316) integriert oder von den beiden Auswerteeinheiten (312,316) unabhängig ist.

11. Neigungsgeber nach einem der Ansprüche 1-10, **dadurch gekennzeichnet, daß** die Vergleichsmittel (318)
(a) Mittel zur Bestimmung der Abweichung zwischen dem ersten und dem zweiten Neigungssignal (310,314) enthalten, sowie
(b) Schwellenwertmittel zum Festlegen eines Schwellenwerts für diese Abweichung, und
(c) Signalgebermittel (322), durch welche ein Signal erzeugbar ist, wenn die bestimmte Abweichung den festgelegten Schwellenwert überschreitet.

12. Neigungsgeber nach Anspruch 11, **gekennzeichnet durch** Einstellmittel (324) zum Einstellen des Schwellenwerts.

## Claims

1. Inclination sensor, comprising
(a) a first pendulum (16;116;216) rotatably mounted in a housing (10),
(b) a first measuring system having
(b₁) a first position sensor (26,30;126,130;226,230) connected to the first pendulum (16;116;216), and
(b₂) a first evaluation unit (312) associated with the first position sensor (26,30;126,130;226,230) and which is adapted to generate a first inclination signal (310) depending on the position of the first pendulum (16;116;216),
(c) a second pendulum (18;118;218) rotatably mounted in the housing (10),
(d) a second measuring system having
(d₁) a second position sensor (28,32;128,132;228,232) connected to the second pendulum (18;118;218), and
(b₂) a second evaluation unit (316) associated with the second position sensor (28,32;128,132;228,232) and which is adapted to generate a second inclination signal (314) depending on the position of the second pendulum (18;118;218), and
(e) comparison means (318), through which the first and the second inclination signal (310 and 314, respectively) are compared to each other and which is adapted to generate a comparison signal (320) depending on this comparison,
**characterized in that**
(f) the first and the second pendulum (16 and 18; 116 and 118; 216 and 218, respectively) are mounted rotatably about a common axis (14;114;214).

2. Inclination sensor as set forth in claim 1, **characterized in that** the first and the second pendulum (16 and 18; 116 and 118; 216 and 218, respectively) are constructed identically.

3. Inclination sensor as set forth in claim 1 or 2, **characterized in that** the first and the second position sensor (26,30 and 28,32; 126,130 and 128,132; 226,230 and 228,232, respectively) are constructed identically.

4. Inclination sensor as set forth in any one of the claims 1-3, **characterized in that** the first and the second position sensor (26,30 and 28,32; 126,130 and 128,132; 226,230 and 228,232, respectively) are adapted to operate in opposite senses.

5. Inclination sensor as set forth in any one of the claims 1-4, **characterized in that** the first and the second evaluation unit (312 and 316, respectively) are constructed identically.

6. Inclination sensor as set forth in any one of the claims 1-5, **characterized in that** the first and/or the second position sensor is a potentiometrical angle sensor (226,230 and 228,232, respectively).

7. Inclination sensor as set forth in any one of the claims 1-6, **characterized in that** the first and/or the second position sensor (26,30 and 28,32; 126,130 and 128,132, respectively) is an inductive angle sensor.

8. Inclination sensor as set forth in any one of the claims 1-7, **characterized in that** the first and/or the second position sensor is an optical angle sensor.

9. Inclination sensor as set forth in any one of the claims 1-8, **characterized in that** the first and/or the second position sensor is a magnetorestrictive angle sensor.

10. Inclination sensor as set forth in any one of the claims 1-9, **characterized in that** the comparison means comprise an electronic comparison circuit (318), which is integrated in the first and/or second evaluation unit (312 and 316, respectively) and which is independent of the two evaluation units (312,316).

11. Inclination sensor as set forth in any one of the claims 1-10, **characterized in that** the comparison means (318) comprise
(a) means for determining the deviation between the first and the second inclination signal (310,314),
(b) threshold means for defining a threshold for this deviation, and
(c) signal transmitter means (322), which are adapted to generate a signal when the determined deviation exceeds the defined threshold.

12. Inclination sensor as set forth in claim 11, **characterized by** adjustment means (324) for adjusting the threshold.

## Revendications

1. Capteur d'inclinaison, comprenant
(a) un premier pendule (16 ; 116 ; 216) logé dans un boîtier (10) de façon à pouvoir tourner,
(b) un premier système de mesure muni
(b₁) d'un premier capteur de position (26,30 ; 126,130 ; 226,230) couplé au premier pendule (16 ; 116 ; 216), et
(b₂) d'une première unité d'évaluation électronique (312) associée au premier capteur de position (26,30 ; 126,130 ; 226,230) permettant de générer un premier signal d'inclinaison (310) en fonction de la position du premier pendule (16 ; 116 ; 216) par rapport au boîtier (10),
(c) un second pendule (18 ; 118 ; 218) logé dans le boîtier (10) de façon à pouvoir tourner,
(d) un second système de mesure muni
(d₁) d'un second capteur de position (28,32 ; 128,132 ; 228,232) couplé au second pendule (18 ; 118 ; 218), et
(d₂) d'une seconde unité d'évaluation électronique (316) associée au second capteur de position (28,32 ; 128,132 ; 228,232) permettant de générer un second signal d'inclinaison (314) en fonction de la position du second pendule (18 ; 118 ; 218) par rapport au boîtier (10), et
(e) des moyens de comparaison (318) permettant de comparer le premier et le second signal d'inclinaison (310 et 314 respectivement) l'un à l'autre et de générer un signal de comparaison (320) en fonction de cette comparaison,
**caractérisé en ce que**
(f) le premier et le second pendule (16 et 18 respectivement ; 116 et 118 respectivement ; 216 et 218 respectivement) sont logés de façon à pouvoir tourner autour d'un axe commun (14 ; 114 ; 214).

2. Capteur d'inclinaison selon la revendication 1, **caractérisé en ce que** le premier et le second pendule (16 et 18 respectivement ; 116 et 118 respectivement ; 216 et 218 respectivement) présentent une configuration identique.

3. Capteur d'inclinaison selon la revendication 1 ou 2, **caractérisé en ce que** le premier et le second capteur de position (26,30 et 28,32 respectivement ; 126,130 et 128,132 respectivement ; 226,230 et 228,232 respectivement) présentent une configuration identique.

4. Capteur d'inclinaison selon l'une quelconque des revendications 1-3, **caractérisé en ce que** le premier et le second capteur de position (26,30 et 28,32 respectivement ; 126,130 et 128,132 respectivement ; 226,230 et 228,232 respectivement) sont en mesure de fonctionner dans le sens contraire l'un par rapport à l'autre.

5. Capteur d'inclinaison selon l'une quelconque des revendications 1-4, **caractérisé en ce que** la première et la second unité d'évaluation électronique (312 et 316 respectivement) présentent une configuration identique.

6. Capteur d'inclinaison selon l'une quelconque des revendications 1-5, **caractérisé en ce que** le premier et/ou le second capteur de position est un capteur angulaire potentiométrique (226,230 et 228,232 respectivement).

7. Capteur d'inclinaison selon l'une quelconque des revendications 1-6, **caractérisé en ce que** le premier et/ou le second capteur de position (26,30 et 28,32 respectivement ; 126,130 et 128,132 respectivement) est un capteur angulaire inductif.

8. Capteur d'inclinaison selon l'une quelconque des revendications 1-7, **caractérisé en ce que** le premier et/ou le second capteur de position est un capteur angulaire optique.

9. Capteur d'inclinaison selon l'une quelconque des revendications 1-8, **caractérisé en ce que** le premier et/ou le second capteur de position est un capteur angulaire magnétorésistant.

10. Capteur d'inclinaison selon l'une quelconque des revendications 1-9, **caractérisé en ce que** les moyens de comparaison comprennent un circuit comparatif électronique (318) qui est intégré dans la première et/ou la seconde unité d'évaluation (312 et 316 respectivement) ou est indépendant des deux unités d'évaluation (312,316).

11. Capteur d'inclinaison selon l'une quelconque des revendications 1-10, **caractérisé en ce que** les moyens de comparaison (318) comprennent
(a) des moyens destinés à déterminer l'écart entre le premier et le second signal d'inclinaison (310,314), ainsi que
(b) des moyens de valeur de seuil destinés à définir une valeur de seuil pour cet écart, et
(c) des moyens de transmission de signaux (322) permettant de générer un signal lorsque l'écart défini dépasse la valeur de seuil fixée.

12. Capteur d'inclinaison selon la revendication 11, **caractérisé par** des moyens de réglage (324) destinés à régler la valeur de seuil.
